# EUROPÄISCHE PATENTSCHRIFT

(11) **EP 1 038 761 B1**
(45) Veröffentlichungstag und Bekanntmachung des Hinweises auf die Patenterteilung: **04.07.2001**
(21) Anmeldenummer: 99105624.3
(22) Anmeldetag: 19.03.1999
(51) Int. Cl.: B62D 47/02

(54) **Im Deckenbereich zweier gelenkig miteinander verbundener Fahrzeuge angeordnetes Drehgelenk**
Articulated connection positioned on the roof for the articulated connection of two vehicles
Liaison pivotante positionée sur le toit pour la connection articulée de deux véhicules

(43) Veröffentlichungstag der Anmeldung: 27.09.2000
(73) Patentinhaber: HÜBNER GmbH, 34123 Kassel (DE)
(72) Erfinder: Karasek, Jens, 34260 Kaufungen (DE)
(74) Vertreter: WALTHER, WALTHER & HINZ Patentanwälte

(56) Entgegenhaltungen:
- EP-A- 0 648 663

## Beschreibung

Die Erfindung betrifft ein im Deckenbereich zweier gelenkig miteinander verbundener Fahrzeuge angeordnetes Drehgelenk mit den Merkmalen

des Oberbegriffes des Anspruchs 1. Ein derartiges Drehgelenk ist aus der Patentschrift EP-A-0 648 663 bekannt. Außerdem ist es bekannt, zur Verbindung zweier gelenkig miteinander verbundener Fahrzeuge, beispielsweise einem Gelenkbus oder einem entsprechenden Schienenfahrzeug, ein Axialgelenklager vorzusehen, das die Verbindung der beiden Fahrzeuge im Bodenbereich gewährleistet. Ein solches Axialgelenklager besitzt drei Freiheitsgrade. Ein mit ausschließlich einem derartigen Axialgelenklager bestücktes Gelenkfahrzeug wäre aufgrund der Bewegungsmöglichkeit der Fahrzeuge relativ zueinander in allen drei Freiheitsgrade instabil. Infolgedessen ist ein Drehgelenk vorzusehen, das im Deckenbereich der beiden Fahrzeuge angeordnet ist, und das die Anzahl der Freiheitsgrade, um das sich die Fahrzeugteile relativ zueinander bewegen können, einschränkt. Hieraus wird deutlich, dass die Stabilisierung der beiden gelenkig miteinander verbundenen Fahrzeuge durch dieses obere Drehgelenk erfolgt.

Für die einwandfreie Funktion der Gelenkverbindung insgesamt zwischen den beiden Fahrzeugen ist erforderlich, dass die Gelenkpunkte sowohl des oberen als auch des unteren Drehgelenks genau fluchtend übereinander liegen. Ist dies nicht der Fall, dann sind die beiden Fahrzeuge gegeneinander verspannt.

Der Erfindung liegt daher die Aufgabe zugrunde, ein Drehgelenk der eingangs genannten Art bereitzustellen, das insbesondere eine Justierung der Drehpunkte der beiden übereinander angeordneten Drehgelenklager dergestalt ermöglicht, dass die Drehpunkte genau übereinander liegen.

Die Aufgabe wird erfindungsgemäß dadurch gelöst, daß die Lenkerarme in ihrer Länge verstellbar sind. Durch die Verstellbarkeit der Länge der Lenkerarme ist eine genaue Ausrichtung der beiden Gelenke fluchtend übereinander möglich.

Im Einzelnen ist weiterhin vorgesehen, dass die Klaue zwei Klauenelemente aufweist, wobei jedes der Klauenelemente einen Lenkerarm besitzt. Hierbei sind die Klauenelemente relativ zueinander verdrehbar; hierdurch wird erreicht, dass auch der Winkel der beiden Lenkerarme relativ zueinander veränderbar ist, und damit eine erleichterte Montage insofern möglich ist, als die endseitig an den Lenkerarmen angeordneten Lenkerarmaugen entsprechend der an dem anderen Fahrzeug angeordneten Lagerböcke in ihrer Lage anpassbar sind.

Des Weiteren weist die Klaue ein Radialgelenklager zur drehbaren Verbindung mit dem Arm des einen Fahrzeugs auf; ein derartiges Radialgelenklager ist in der Lage, hohe radiale Kräfte zu übertragen, wie es z.B. erforderlich ist, wenn die beiden durch das Gelenk verbundenen Fahrzeuge abgebremst, beschleunigt oder angehoben werden. Ein derartiges Radialgelenklager zeigt im Einzelnen eine Kugelhülse, die am Außenumfang eine Gelenkschale besitzt, die im Gelenkauge des Armes fixierbar ist. Zur Fixierung der Gelenkschale im Gelenkauge des Armes ist im Einzelnen ein Spannring vorgesehen.

Wie bereits zu eingangs erwähnt, sind die beiden Klauenelemente relativ zueinander verdrehbar; hierbei ist im Einzelnen vorgesehen, dass das eine Klauenelement einen Klauentopf aufweist, in den der Zapfen des anderen Klauenelementes eingreift, wobei zwischen Zapfen und Topf eine Spielpassung besteht. Durch eine solche Spielpassung ist somit die Verdrehung der beiden Klauenelemente relativ zueinander möglich, mit der Folge, dass hierdurch der Winkel der beiden Lenkerarme relativ zueinander veränderbar ist.

Nach einem weiteren Merkmal der Erfindung zeigen die beiden Klauenelemente zu ihrer Verbindung einen in der Drehachse angeordneten Schraubbolzen, der gegebenenfalls auf seinem Umfang eine Spannhülse aufweist, um auftretende Querkräfte besser abfangen zu können.

Anhand der Zeichnungen wird die Erfindung nachstehend beispielhaft näher erläutert.
- Figur 1: zeigt das Drehgelenk in einer Ansicht von oben;
- Figur 2: zeigt einen Schnitt gemäß der Linie II-II aus Figur 1.

Das insgesamt mit 1 bezeichnete obere Drehgelenk zeigt die beiden winklig zueinander stehenden Lenkerarme 10, 20, die an ihrem einen Ende jeweils das Klauenelement 11, 21 aufweisen, wobei die beiden Klauenelemente 11,21 die Klaue 8 bilden. Am anderen, gegenüberliegenden Ende zeigt ein jeder Lenkerarm 10, 20 ein Lenkerarmauge 12, 22 zur Verbindung mit der Achse 31, 41 eines am Wagenkasten des anderen Fahrzeugs angeordneten, insgesamt mit 30 bzw. 40 bezeichneten Lagerbockes. Ein jeder dieser Lenkerarme 10, 20 ist darüberhinaus in seiner Länge veränderbar. Zur Veränderbarkeit der Länge der einzelnen Lenkerarme 10, 20 besitzen die einzelnen Lenkerarme eine Gewindehülse 15, 25 und jeweils einen Gewindezapfen 16, 26, die ineinander verdrehbar gelagert sind.

Das Drehgelenk 1 zeigt darüber hinaus den Arm 50, der durch die Schraubbolzen 51 an dem Ständer 60 fixiert ist, der an dem einen Fahrzeugteil befestigbar ist. Durch Anordnung von Unterlegscheiben zwischen dem Flansch 53 des Armes 50 und dem Flansch 63 des Ständers 60 ist ebenfalls eine Veränderung des Abstandes des Drehpunktes zum benachbarten Fahrzeug möglich, mit dem Ziel der Ausrichtung der Drehachsen der beiden übereinander angeordneten Drehgelenke fluchtend übereinander.

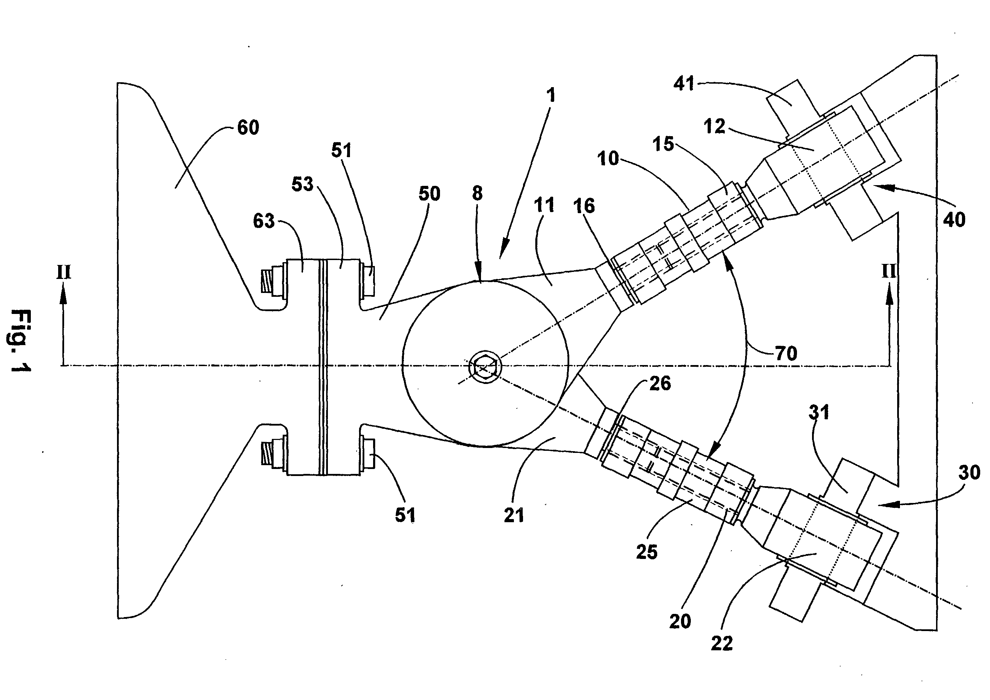

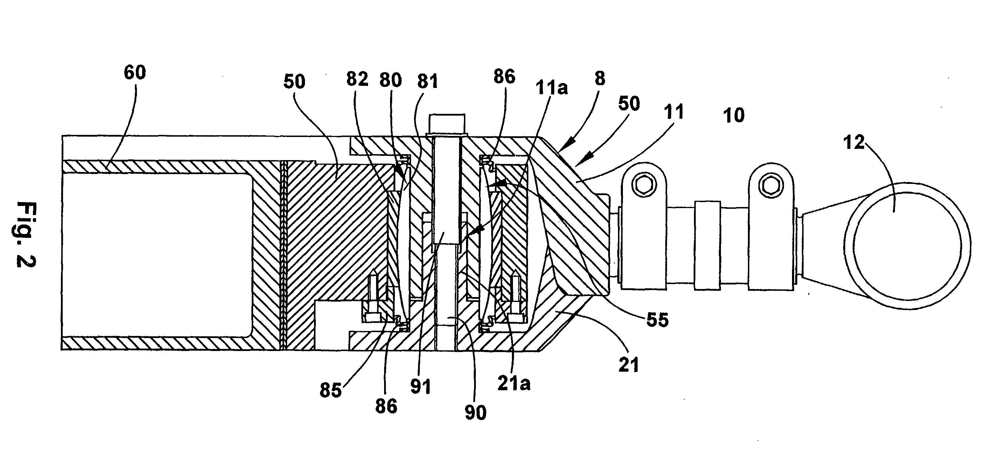

Die Verbindung der beiden Klauenelemente 11, 21 ergibt sich im Einzelnen aus der Schnittdarstellung gemäß Fig. 2. So ist aus Fig. 2 erkennbar, dass das obere Klauenelement 11 einen Klauentopf 11a zeigt, in den ein entsprechender Zapfen 21a des unteren Klauenelements 21 hineinragt. Wesentlich hierbei ist, dass zwischen dem Klauentopf 11a und dem Zapfen 21a eine Spielpassung besteht, die eine Verdrehung der beiden Klauenelemente 11, 21 relativ zueinander mit den Ziel ermöglicht, den insgesamt mit 70 bezeichneten Winkel (Fig. 1) so zu verändern, dass eine Aufnahme der Lenkerarme 10, 20 durch die Lager 30, 40 mit entsprechendem Toleranzausgleich ermöglicht ist.

Um eine Verdrehung der aus den beiden Klauenelementen 11, 21 bestehenden Klaue 8 gegenüber dem Arm 50 zu ermöglichen, ist das insgesamt mit 80 bezeichnete Radialgelenklager vorgesehen. Dieses Radialgelenklager 80 besteht aus einer Kugelhülse 81, die auf dem Umfang eine Gelenkschale 82 zeigt, in der die Kugelhülse 81 verdrehbar gelagert ist. Diese Gelenkschale 82 ist durch den Spannring 85 im Gelenkauge 55 des Armes 50 fixiert. Um zu verhindern, dass die Kugelhülse 81 verschmutzt, sind Dichtungen 86 vorgesehen.

Zur Verbindung der beiden Klauenelemente 11, 21 und der Festspannung der Kugelhülse 81 dient der Schraubbolzen 90, der eine Hülse 91 zeigt, die der Aufnahme von eventuell auftretenden Querkräften dient.

## Patentansprüche

1. Im Deckenbereich zweier gelenkig miteinander verbundener Fahrzeuge angeordnetes Drehgelenk (1), wobei
ein an dem einen Fahrzeug angeordneter Arm (50) vorgesehen ist, dessen Ende durch eine Klaue (8) verdrehbar erfassbar ist, wobei die Klaue (8) zwei winklig zueinander angeordnete Lenkerarme (10,20) zur Verbindung mit dem anderen Fahrzeug aufweist, dadurch gekennzeichnet, daß die Lenkerarme (10,20) in der Länge verstellbar sind.

2. Drehgelenk nach Anspruch 1
**dadurch gekennzeichnet,**
dass die Klaue (8) zwei Klauenelemente (11,21) aufweist, wobei jedes der Klauenelemente (11,21) einen Lenkerarm (10,20) besitzt.

3. Drehgelenk nach Anspruch 2
**dadurch gekennzeichnet**,
dass die Klauenelemente (11,21) relativ zueinander verdrehbar sind.

4. Drehgelenk nach Anspruch 1
**dadurch gekennzeichnet,**
dass die Klaue (8) ein Radialgelenklager (80) zur drehbaren Verbindung mit dem Arm (50) des einen Fahrzeugs zeigt.

5. Drehgelenk nach Anspruch 4
**dadurch gekennzeichnet,**
dass das Radielgelenklager (80) eine Kugelhülse (81) aufweist, die am Außenaumfang eine Gelenkschale (82) besitzt, die im Gelenkauge (55) des Armes (50) fixierbar ist.

6. Drehgelenk nach Anspruch 5
**dadurch gekennzeichnet,**
dass zur Fixierung der Gelenkschale (82) im Gelenkauge (55) des Arms (50) ein Spannring (85) vorgesehen ist.

7. Drehgelenk nach Anspruch 2
**dadurch gekennzeichnet,**
dass das eine Klauenelement (11) einen Klauentopf (11a) aufweist, in den der Zapfen (21a) des anderen Klauenelements (20) eingreift, wobei zwischen Zapfen und Topf eine Spielpassung vorgesehen ist.

8. Drehgelenk nach Anspruch 2
**dadurch gekennzeichnet,**
dass zur Verbindung der beiden Klauenelemente (11,21) ein Schraubbolzen (90) mit Spannhülse (91) vorgesehen ist.

9. Drehgelenk nach Anspruch 1
**dadurch gekennzeichnet,**
dass der Lenkerarm (10,20) endseitig zur Verbindung mit dem anderen Fahrzeug ein Lenkerarmauge (12,22) aufweist.

## Claims

1. Swivel joint (1) mounted in the ceiling area of two hinge-linked vehicles, whereas an arm (50), whose end may be rotatably seized by a claw (8), is provided on one of the vehicles, said claw (8) having two guide rods (10, 20) relatively angled for connection with the other vehicle,
**characterized in that** the guide rods (10, 20) are adjustable in length.

2. Swivel joint according to claim 1,
**characterized in that** the claw (8) is provided with two claw elements (11, 21), whereas each of the claw elements (11, 21) has a guide rod (10, 20).

3. Swivel joint according to claim 2,
**characterized in that** the claw elements (11, 21) are rotatable relative to each other.

4. Swivel joint according to claim 1,
**characterized in that** the claw (8) is provided with a plain bearing (80) ensuring a pivotable connection with the arm (50) of the one vehicle.

5. Swivel joint according to claim 4,
**characterized in that** the plain bearing (80) is provided with a spheroidal case (81) having on its outer periphery a joint shell (82) that may be fastened in the joint eye (55) of the arm (50).

6. Swivel joint according to claim 5,
**characterized in that** a tension ring (85) is provided to fasten the joint shell (82) in the joint eye (55) of the arm (50).

7. Swivel joint according to claim 2,
**characterized in that** the one claw element (11) is provided with a claw mortise (11a) into which the tenon (21a) of the other claw element (20) is engaging, whereas there is a clearance fit between tenon and mortise.

8. Swivel joint according to claim 2,
**characterized in that** a stud (90) is provided together with a tension sleeve (91) to connect the two claw elements (11, 21).

9. Swivel joint according to claim 1,
**characterized in that** the guide rod (10, 20) is provided on its end with a guide rod's eye (12, 22) for the connection with the other vehicle.

## Revendications

1. Articulation pivotante (1) disposée dans la toiture de deux voitures articulées, un bras (50) disposé sur l'une des voitures pouvant être saisi par rotation par un clabot (8), le clabot (8) étant pourvu de deux bras de suspension (10, 20) faisant un angle et servant à l'accouplement avec l'autre voiture,
**caractérisée en ce que** la longueur des bras de suspension (10, 20) est ajustable.

2. Articulation pivotante selon la revendication 1
**caractérisée en ce que**
le clabot (8) présente deux éléments de clabot (11, 21) ayant chacun un bras de suspension (10, 20).

3. Articulation pivotante selon la revendication 2
**caractérisée en ce que** les éléments de clabot (11, 21) ont un mouvement relatif de rotation.

4. Articulation pivotante selon la revendication 1
**caractérisée en ce que** le clabot (8) possède un appui articulé transversal (80) qui assure la liaison par rotation avec le bras (50) de l'une des voitures.

5. Articulation pivotante selon la revendication 4
**caractérisée en ce que** l'appui articulé transversal (80) comporte une douille sphéroïdale (81) possédant sur son pourtour extérieur un coussinet (82) qui peut être fixé dans le bossage (55) du bras (50).

6. Articulation pivotante selon la revendication 5
**caractérisée en ce que** pour fixer le coussinet (82) dans le bossage (55) du bras (50), un collier tendeur (85) est prévu.

7. Articulation pivotante selon la revendication 2
**caractérisée en ce que** l'un des éléments de clabot (11) est pourvu d'un logement (11a) dans lequel s'engage la dent (21a) de l'autre élément de clabot (20), un ajustement avec jeu étant prévu entre la dent et le logement.

8. Articulation pivotante selon la revendication 2
**caractérisée en ce que** un boulon fileté (90) avec manchon de serrage (91) est prévu qui sert à la liaison des deux éléments de clabot (11, 21).

9. Articulation pivotante selon la revendication 1
**caractérisée en ce que** le bras de suspension (10, 20) est pourvu à son extrémité d'un bossage de bras (12, 22) servant à l'accouplement à l'autre voiture.
